(19)

Europäisches Patentamt
European Patent Office
Office européen des brevets

(11) **EP 3 599 730 A1**

(12) **EUROPEAN PATENT APPLICATION**

(43) Date of publication:
   **29.01.2020   Bulletin 2020/05**

(51) Int Cl.:
   ***H04J 14/04*** *(2006.01)*

(21) Application number: **18185497.7**

(22) Date of filing: **25.07.2018**

(84) Designated Contracting States:
   **AL AT BE BG CH CY CZ DE DK EE ES FI FR GB GR HR HU IE IS IT LI LT LU LV MC MK MT NL NO PL PT RO RS SE SI SK SM TR**
   Designated Extension States:
   **BA ME**
   Designated Validation States:
   **KH MA MD TN**

(71) Applicant: **Vrije Universiteit Brussel**
   **1050 Brussel (BE)**

(72) Inventors:
   • **VERSCHAFFELT, Guy**
     **2050 Antwerpen (BE)**
   • **VAN DER SANDE, Guy**
     **2820 Bonheiden (BE)**
   • **PAUWELS, Jaël**
     **3290 Diest (BE)**

(74) Representative: **IPLodge bvba**
   **Technologielaan 9**
   **3001 Heverlee (BE)**

(54) **SPACE DIVISION MULTIPLEXING METHOD AND SYSTEM USING SPECKLE PATTERN RECOGNITION IN MULTI-MODE OPTICAL FIBRES**

(57)    Method and system for transmitting information from a transmitting location, comprising: a multimode connection having an input located at said transmitting location and having an output located at said receiving location, coherent light generating means at said transmitting location operable to provide a plurality of coherent light beams to said transmitting location by way of space domain modulation of said coherent light beams, means providing space domain modulation of said coherent light beams to the input of said multimode connection, said multimode connection operating to provide a plurality of speckle patterns at the output thereof, means operable to receive said plurality of speckle patterns at a receiving location and to transmit the output of the multimode connection to an array of photodetectors, means to process outputs of the array of photodetectors to classify one of the plurality of speckle patterns as from one of the coherent light beams.

Figure 2

## Description

The present invention relates to methods, devices and systems for speckle pattern recognition and classification in multi-mode optical fibres and software or hardware.

## Background

Telecommunication using single-mode optical fibres forms the backbone of the Internet and the explosive growth of telecommunication demands has promoted the development of techniques that offer ever higher data capacity. To meet this challenging requirement, several degrees of freedom offered by optical signals have already been explored and used: today's optical communication uses control of the wavelength, amplitude, phase and polarization of the optical carrier signal to maximize the bandwidth. These techniques are still under further development, but it is expected that soon this will not be enough to meet the increasing data transmission capacity requirements. In order to solve this capacity limitation, there is a considerable interest in further boosting the transmission capacity.

One can increase the transmission capacity by installing in parallel multiple optical fibres. This is not a very cost-effective technique as the required number of network components (such as filters, amplifiers, couplers, ...) scales linearly with the number of parallel fibres. Therefore, there has been extensive research in the past few years on how to exploit the spatial degrees of freedom in a single fibre. This has led to the development of space division multiplexing (SDM) using specialty fibres, in which multiple cores and/or a waveguide structure that supports a few transverse modes are used and where each core/mode carries an optical data signal. These special fibres are not compatible with standard telecomm equipment. Their use thus requires a complete overhaul of the telecommunication network and the re-development of several key network components that must now be tailored to the exact geometry of the specialty fibre employed in the network. Therefore, these promising techniques have not yet been put into major use in real-world telecommunication systems.

A much simpler implementation of SDM is the use of standard multimode optical fibres. Such fibres - even with a relatively small diameter of the order of 10 micrometer - support a large number of transverse modes, each of which can be used to transmit a data signal. This approach has been discarded due to the unavoidable mixing between the many transverse modes that are supported in these multi-mode fibres. Because of this mode-mixing, a signal injected in one transverse mode will leak to many other modes after a short propagation distance, which lowers the signal-to-noise ratio significantly making efficient communication impossible. Recently, there has been some renewed interest in this approach, where light is coupled in a specific way into the fibre such that only a few mode groups are excited at the fibre input. Special mode selective filters are placed in between fibre splices such that the mode coupling is reduced. Still, mode mixing cannot be avoided resulting in a low signal-to-noise ratio and quite high bit-error rates, illustrating the complexity of this method.

United States Patent No. 5,136,666 by Anderson et al. discloses a fibre optic communication system, where on top of a standard temporal modulation, the input light beam's spatial extent is also modulated with a certain pattern. This pattern is associated to an address. The authors describe that the light beam travelling through a multimode fibre will undergo mode mixing and at the output of a fibre a speckle image will appear. If two light beams are imprinted with an orthogonal spatial pattern (a different address), the speckle patterns will also be different. A detector set-up is described based on a photo refractive nonlinear optical crystal. Before free running operation, a diffraction pattern is written nonlinearly in this photorefractive crystal by using the interference of two beams which are specific to the spatial modulation corresponding to a certain address. The goal is that if a light beam with a speckle image corresponding to the right address impinges on the crystal, the beam will be diffracted to another channel or detector corresponding to this address. A beam with an orthogonal speckle pattern would be left untouched.

### Paper Igarashi

Multiple parallel spatial channels are disclosed, implemented by using special fibres with multiple cores, each core supporting a few spatial modes. This approach does not work with standard multi-mode fibres.

References

D.J. Richardson, J.M. Fini, and L.E. Nelson, "Space Division Multiplexing in Optical Fibres", Nature Photonics 7, 354-362, 2013.

R.G.H. van Uden, R. Amezcua Correa, E. Antonio Lopez, F.M. Huijskens, C. Xia, G. Li, A. Schülzgen, H. de Waardt,

## EP 3 599 730 A1

A.M.J. Koonen, and C.M. Okonkwo, "Ultra-high-density spatial division multiplexing with a few-mode multicore fibre", Nature Photonics 8, 865-870, 2014.

H. Chen, C. Jin, B. Huang, N. K. Fontaine, R. Ryf, K. Shang, N. Grégoire, S. Morency, R.-J. Essiambre, G. Li, Y. Messaddeq, and S. LaRochelle, "Integrated cladding-pumped multicore few-mode erbium-doped fibre amplifier for space-division-multiplexed communications", Nature Photonics 10, 529-533, 2016.

D. J. Richardson, "New optical fibres for high-capacity optical communications", Philosophical Transactions of the Royal Society A 374, art. nr. 20140441, 2016.

A. Sano et al., "409-Tb/s + 409-Tb/s crosstalk suppressed bidirectional MCF transmission over 450 km using propagation-direction interleaving", Optics Express 21, 16777-16783, 2013.

K. Igarashi, D. Soma, Y. Wakayama, K. Takeshima, Y. Kawaguchi, N. Yoshikane, T. Tsuritani, I. Morita, and M. Suzuki, "Ultra-dense spatial-division-multiplexed optical fibre transmission over 6-mode 19-core fibres", Optics Express 24, 10213-10231, 2016.

K. Shibahara et al., "Dense SDM (12 core $\times$ 3 mode) transmission over 527 km with 33.2-ns mode-dispersion employing low complexity parallel MIMO frequency-domain equalization", Proceedings of the Optical Fibre Communications Conference OFC 2015, Paper Th5C.3, 2015.

N. Bai et al., "Mode-division multiplexed transmission with inline few-mode fibre amplifier", Optics Express 20, 2668-2680, 2012.

S. Berdague and P. Facq, "Mode division multiplexing in optical fibres," Applied Optics 21, 1950-1955, 1982.

R. Ryf, N. K. Fontaine, H. Chen, B. Guan, B. Huang, M. Esmaeelpour, A. H. Gnauck, S. Randel, S.J.B. Yoo, A.M.J. Koonen, R. Shubochkin, Y. Sun, and R. Lingle, "Mode-multiplexed transmission over conventional graded-index multimode fibres", Optics Express 23, 235-246, 2015.

## Summary of the Invention

In one aspect embodiments of the present invention provide a communication system for transmitting information from a transmitting location to a receiving location, comprising;

a multimode connection having an input located at said transmitting location and having an output located at said receiving location,
coherent light generating means at said transmitting location operable to provide a plurality of coherent light beams to said transmitting location by way of space domain modulation of said coherent light beams, means providing space domain modulation of said coherent light beams to the input of said multimode connection, said multimode connection operating to provide a plurality of speckle patterns at the output thereof, means operable to receive said plurality of speckle patterns at the receiving location and to transmit the output of the multimode connection to an array of photodetectors, and means to process outputs of the array of photodetectors to classify one of the plurality of speckle patterns as from one of the coherent light beams. The mean to process can be a classifier. The one of the plurality of speckle patterns can be co-generated from one of the coherent light beams. This has the advantage of transmitting large amounts of data over one fibre without using special fibres, e.g. with hollow sections.

Means can be provided for applying time domain modulation to said coherent light beams. The combination of this technique with the use of speckle classification allows an increase in data transmission. These means can be provided by a time domain modulator.

The means to process can be operable to recover said time domain modulation from said plurality of speckle patterns. The means to process may be provided by a demodulator.

Means to set any, some or all of the following can be provided:

Wavelength of a coherent light beam,
Incident position on the input to the multimode connection, and
Polarization of a coherent light beam.

The plurality of coherent lights beams can be a plurality of laser beams from different lasers or a single laser beam split into several laser beams or a combination of these two schemes. This provides a significant flexibility for arranging the laser beam input face.

Means to modulate the intensity or phase of one some or all of the plurality of coherent light beams can be provided. The means to modulate can be a modulator. This allows a higher throughput of data.

The means to modulate may comprise means to modulate an injection current of the different lasers or to modulate the intensity with an electro-optical modulator to each of the several laser beams split from a single laser beam.

The multimode connection can comprise a multimode optical fibre that transmits the plurality of coherent beams from the input to the output. The multimode fibre can support many transverse modes. This allows a higher data throughput.

Several pieces of multi-mode optical fibre can be sequentially coupled together in the multimode connection and/or that other fibre optic components such as optical amplifiers, optical splitters and add/drop multiplexers are placed in-between pieces of multi-mode optical fibre. This allows a higher data throughput.

The plurality of coherent light beams can differ from one another in at least one of the following aspects: there is a minimum difference in the wavelength of each beam and/or in the position of each beam at a front facet of the multimode connection and/or in the angle of incidence of each beam at the front facet of the multimodal connection and/or in the polarization of each beam. This can affect the way the speckle patterns are classified.

The plurality of coherent light beams can differ from one another enough such that the speckle pattern generated by each of the coherent beams separately is uncorrelated with the speckle pattern generated by any of the other beams. This can affect the way the speckle patterns are classified.

The system can comprise a multi-mode fibre coupler. This can improve coupling and classification of speckle patterns.

The multi-mode fibre coupler can have a plurality of input fibres and an output, to which a part of the light of each exiting input fibre is coupled. This can improve classification of speckle patterns.

A cross-correlation between any two of the speckle patterns is preferably smaller than 0.2 or about 0.2. This can improve coupling and classification of speckle patterns.

The means to process outputs of the array of photodetectors is adapted to deduce from the speckle patterns which beams have been switched on at a particular moment in time.

Embodiments of the present invention can provide a method for transmitting information from a transmitting location to a receiving location, with a multimode connection having an input located at said transmitting location and having an output located at said receiving location, the method comprising:

generating a plurality of coherent light beams at said transmitting location and providing the plurality of coherent light beams to said transmitting location by way of space domain modulation of said coherent light beams at the input of said multimode connection,

generating a plurality of speckle patterns at the output thereof, receiving said plurality of speckle patterns at the receiving location and transmitting the output of the multimode connection to an array of photodetectors, and processing outputs of the array of photodetectors to classify one of the plurality of speckle patterns as from one of the coherent light beams.

The one of the plurality of speckle patterns can be co-generated from one of the coherent light beams.

Time domain modulation can be applied to said coherent light beams.

The processing is preferably operable to recover said time domain modulation from said plurality of speckle patterns.

The method can include setting any, some or all of:

wavelength of a coherent light beam,
incident position on the input to the multimode connection, and
polarization of a coherent light beam.

The plurality of coherent lights beams are preferably a plurality of laser beams from different lasers or a single laser beam split into several laser beams.

The method can include modulating the intensity or phase of one some or all of the plurality of coherent light beams.

The modulating can comprise modulating an injection current of the different lasers or modulating the intensity with an electro-optical modulator to each of the several laser beams split from a single laser beam.

The multimode connection can comprise a multimode optical fibre that transmits the plurality of coherent beams from the input to the output. Preferably, the multimode fibre can support many transverse modes.

Several pieces of multi-mode optical fibre can be sequentially coupled together in the multimode connection and/or that other fibre optic components such as optical amplifiers, optical splitters and add/drop multiplexers are placed in-between pieces of multi-mode optical fibre.

The plurality of coherent light beams can differ from one another in at least one of the following aspects: there is a minimum difference in the wavelength of each beam and/or in the position of each beam at a front facet of the multimode connection and/or in the angle of incidence of each beam at the front facet of the multimodal connection and/or in the polarization of each beam.

The plurality of coherent light beams can differ from one another enough such that the speckle pattern generated by each of the coherent beams separately is uncorrelated with the speckle pattern generated by any of the other beams.

A cross-correlation between any two of the speckle patterns is preferably smaller than 0.2 or about 0.2.

Processing of outputs of the array of photodetectors can be adapted to deduce from the speckle patterns which beams have been switched on at a particular moment in time.

Embodiments of present invention present a classifier for use with a system for transmitting information from a transmitting location to a receiving location, over a multimode connection having an input located at said transmitting location and having an output located at said receiving location, coherent light generating means at said transmitting location operable to provide a plurality of coherent light beams to said transmitting location by way of space domain modulation of said coherent light beams, means providing space domain modulation of said coherent light beams to the input of said multimode connection, said multimode connection operating to provide a plurality of speckle patterns at the output thereof, the classifier comprising: means operable to receive said plurality of speckle patterns at the receiving location and to transmit the output of the multimode connection to an array of photodetectors, and means to process outputs of the array of photodetectors to classify one of the plurality of speckle patterns as from one of the coherent light beams.

The means to process can be operable to recover said time domain modulation from said plurality of speckle patterns. The means to process can be a demodulator.

A cross-correlation between any two of the speckle patterns is preferably smaller than 0.2 or about 0.2.

The means to process outputs of the array of photodetectors is preferably adapted to deduce from the speckle patterns which beams have been switched on at a particular moment in time.

The classifier can be adapted to receive intensity modulated or phase modulated beams of one some or all of the plurality of coherent light beams.

The multimode connection can comprises a multimode optical fibre that transmits the plurality of coherent beams to the output. The multimode fibre can support many transverse modes.

The classifier can be adapted to receive a plurality of coherent light beams which differ from one another in at least one of the following aspects: there is a minimum difference in the wavelength of each beam and/or in the position of each beam at a front facet of the multimode connection and/or in the angle of incidence of each beam at the front facet of the multimodal connection and/or in the polarization of each beam.

The classifier can be adapted to receive the plurality of coherent light beams which differ from one another enough such that the speckle pattern generated by each of the coherent beams separately is uncorrelated with the speckle pattern generated by any of the other beams.

The classifier can include or can work with a multi-mode fibre coupler.

The multi-mode fibre coupler can have a plurality of input fibres and an output, to which a part of the light of each exiting input fibre is coupled for coupling to the classifier.

The classifier can be adapted to receive speckle patterns whereby a cross-correlation between any two of the speckle patterns can be smaller than about 0.2.

The classifier can work with or include the means to process outputs of the array of photodetectors which means can be adapted to deduce from the speckle patterns which beams have been switched on at a particular moment in time.

Embodiments of the present invention provide a computer program product that executes any of the methods according to embodiments of the present invention when loaded onto a processing engine or can implement the system according to embodiments of the present invention. A non-transitory signal storage medium can be provided for storing the computer program product.

## Brief description of the drawings

Figure 1 shows speckle patterns measured at the end of a multimode fibre with 200 micron diameter and using a single mode semiconductor laser as source. Left and right images are recorded for slightly different positions of the source in the plane transverse to the laser beam's propagation direction.

Figure 2 is a schematic illustration of a communication link according to an embodiment of the present invention.

Figure 3 illustrates a set-up that is used to couple four lasers into a fibre according to an embodiment of the present invention. The differences in focal lengths are not of that much importance, although they will influence the spot sizes.

Figure 4 illustrates the reflection of the four laser beams onto the front fibre facet, imaged with a CCD. They are preferably separated as much as possible within the extent of the fibre core to get a low correlation between the images at the output of the fibre when different lasers are turned on.

Figures 5A to 5D illustrate methods in accordance with embodiments of the present invention.

Figure 6 illustrates speckle correlation between the first signal 10 and the signal that is sent through the fibre in accordance with an embodiment of the present invention.

Figure 7 illustrates a speckle correlation between the first signal 01 and the signal that is sent through the fibre in accordance with an embodiment of the present invention.

Figure 8 illustrates the success rate for different threshold decision levels for the correlation in accordance with an embodiment of the present invention.

Figure 9 illustrates a speckle correlation between the first signal 1000 and the signal that is sent through the fibre in accordance with an embodiment of the present invention.

Figure 10 illustrates the threshold ranges for different measurements for which the success rate is optimal with the corresponding maximal success rate SR when using one, two, three and four lasers in accordance with an embodiment of the present invention.

Figure 11 illustrates a representation how one can achieve the densest fill factor, where spots are separated with $D$ from each other in accordance with an embodiment of the present invention.

Figure 12 illustrates the relation between the success rate and the number of neurons that are present in the classifier when 16 kernels with sizes of one by one pixel are used as observations in accordance with an embodiment of the present invention.

Figure 13 illustrates the relation between the success rate and the number of kernels with sizes of one pixel and 20 neurons in accordance with an embodiment of the present invention.

## Description of the preferred embodiments

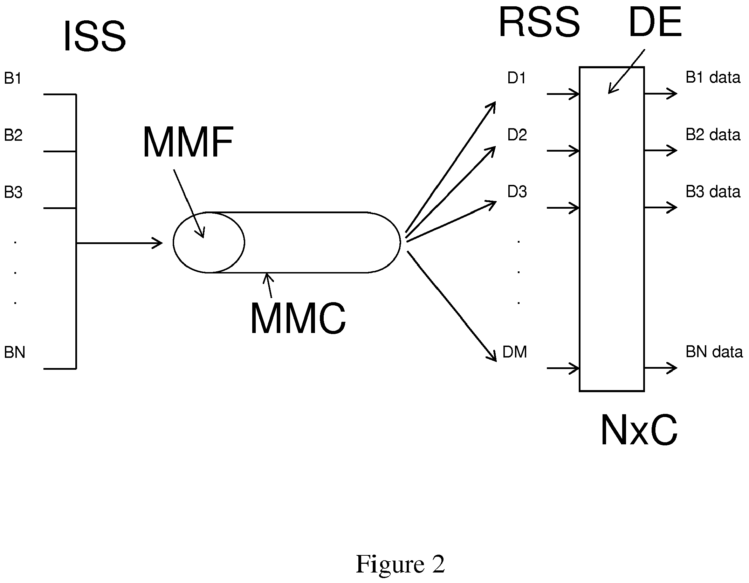

A mechanical and optical arrangement of lasers is shown schematically in Figure 2 and comprise an input sub-system ISS, a multi-mode optical fibre based connection sub-system MMC and a receiver sub-system RSS. In embodiments of the invention, multiple data-signals are transmitted spatially in parallel with one another over a multi-mode optical fibre MMF. The data-signals are spatially and temporally coherent optical beams that are intensity/phase modulated in time. The multi-mode fibre MMF is such that it supports several transverse modes. The field injected in these modes mixes during propagation along the fibre. At the end-facet of the fibre, the data-signals are no longer spatially separated nor restricted in size. Rather, these signals have spread over the different propagation modes of the multi-mode fibre MMF. In order to retrieve the originally sent data, the resulting speckle pattern is spatially sampled at the end facet of the fibre, and these patterns are classified by detection electronics DE. The detection electronics DE can include or can be adapted to use a classifier. During classification the measured pattern is compared with a training set of patterns. These can be regularly sent through the data-link in order to compensate for variations in the mode-mixing in the fibre.

In the input sub-system ISS, N optical fields (labelled B1, B2 ....BN) are coupled into the multi-mode connection system MMC. Each of these N beams can originate from a different laser, or a single laser can be used whose output beam is split into N beams by means of optical beam splitters or a number of lasers can be used and a number of beam splitters as well. N different input data signals are added to this input sub-system by modulating the intensity or phase of the fields B1, B2 ...BN. This can e.g. be accomplished by modulating the injection current of the lasers (when each beam is generated by a different laser) or by modulating the intensity using an electro-optical modulator for each beam (when using a single laser or any laser with a beam splitter). Each laser should be temporally and spatially coherent such that the resulting speckle pattern at the output facet has a sufficiently large speckle contrast, i.e. the speckle contrast should be larger than 0.1. Multiple coherently related lasers are not required.

Each of the beams B1-BN is coupled into the multi-mode optical fibre based connection sub-system MMC. This sub-system consists - at least partly - of a multi-mode optical fibre MMF that transmits the beams B1-BN from the input sub-system ISS to the receiver sub-system RSS. The multi-mode optical fibre MMF should support many transverse modes (e.g. a typical multi-mode fibre with a core diameter of 50 $\mu$m supports about 400 modes).

It is also possible that several pieces of multi-mode optical fibre MMF are sequentially coupled together in the connection sub-system MMC and/or that other fibre optic components (such as optical amplifiers, optical splitters and add/drop multiplexers) are placed in-between pieces of multi-mode optical fibre MMF.

Because of the large number of transverse modes supported in the multi-mode fibre MMF and because of mode-mixing that will happen in the multi-mode fibre MMF, the quasi-random interference between these different transverse modes will lead to a speckle pattern at the output facet of the connection sub-system MMC even when a single beam is used in the input sub-system ISS. Such a pattern consists of a collection of bright and dark regions. The exact position and shape of these spots /patterns depends on several parameters of both the input beam B1-BN and of the connection sub-system MMC: the pattern will change when changing the wavelength, or 'coupling' or 'incidence' and/or polarization of the input beam and when changing the fibre bends, temperature and/or mechanical stress in the multi-mode fibres. Coupling or incidence includes other variations such as spot size, beam convergence and incidence angle.

The N beams B1-BN that are coupled into the connection sub-system MMC should differ from one another so as to create different speckle patterns for example in at least one of the following aspects: there should be a minimum difference in the wavelength of each beam B1-BN and/or in the position of each beam at the front facet of the connection sub-system MMC and/or in the angle of incidence of each beam B1-BN at the front facet of the connection sub-system MCC and/or in the polarization of each beam B1-BN. These differences should be large enough such that the speckle pattern generated by each of the beams separately is uncorrelated with the speckle pattern generated by any of the other beams, i.e. the cross-correlation between any two of these speckle patterns should be smaller than 0.2 or about 0.2. The numerical value of the minimum difference in several parameters can be measured and depends on the specifications of the multi-mode fibre MMF that is used. For example, for a 50 $\mu$m core multi-mode step index fibre, the measured minimum wavelength difference is 0.15 nm and the measured minimum difference in position is 4 $\mu$m.

Further, a multi-mode fibre coupler can be used (not shown). Such a coupler has X input fibres and 1 output, to which (part of) the light of each input fibre is coupled. With such a coupler, the speckle patterns corresponding to each of the inputs are uncorrelated.

In embodiments of the present invention data is received by identifying, from the speckle pattern, which beam has been switched on at a particular moment in time. This can be done by classifying, (using a classifier NxC) each speckle pattern at the output of the connection sub-system MCC. Thereby, no attempt needs be made to control the exact speckle pattern originating from each beam B1-BN. The speckle patterns originating from different beams B1-BN are preferably uncorrelated, such that the classification algorithm of the classifier NxC at the output can make a distinction between e.g. beam 1 being switched on and a different beam 2 being switched on.

In order to perform the classification, the field emitted at the output of the connection sub-system MMC is sampled at M different locations. Additionally, some of the feature extraction can be done in optics (not shown) after the output of the connection sub-system MMC but before the sampling of the field. Sampling of the field can e.g. be done by an array of waveguides e.g. optical fibres, each coupled to a high-speed photo-detector that converts the intensity of one read-out waveguide (which plays the role of one detection location) into the electrical domain. In conjunction with the classification algorithm, the number M and the location size are determined.

The classifier NxC can be adapted for, and the classification algorithm can be based on, calculating correlations between stored test speckle images corresponding to each of the lasers being turned on and defining a decision level for each calculated correlation. Alternatively, the classification algorithm can be based on a learning system, which can be trained either offline or online. The learning can be done offline in software, by recording a sequence of speckle images for known combinations of switched-on lasers and using this data in the training phase. This can be done, for example, with an artificial neural network-based learning system.

Over time, the mode mixing in the multi-mode optical connection sub-system MMC can change, e.g. due to fluctuations in temperature, fibre bends and mechanical stress, and the training images will need to be sent again and the detection sub-system DE retrained. By using online self-learning, these test images do not need to be sent again and a learning rule can be defined based on e.g. the amount of bit errors occurring in the channel. In this way, the learning system such as an artificial neural network will constantly be adapted to compensate for the evolution in the mode mixing and mode interference. The learning system can be based on a deep learning approach, but other approaches such as extreme learning machines, reservoir computing or a simple linear classifier are included within the scope of the invention.

Fast electronic circuits can be used to implement the learning system such as the neural network that processes the detector signals at very high speed, such that the training and operation can be done online

It is possible to record time traces of the detector output signals using e.g. a high-speed oscilloscope, and post-process this data on a computer. The training system such as the neural network, its training and its operation is then done off-line in software.

As described above, the laser or lasers is/are arranged so that the laser beams B1-BN fall onto the input facet of a fibre MMF. The intensity/phase of each beam can be modulated in time. A separate laser B1-BN can be used for each beam, or a single laser beam can be split into several output beams e.g. using beam splitters. The advantage of the latter approach is that the speckle contrast at the output fibre facet will remain large, even when a large number of beams is used. Because of the scrambling of the polarization in the fibre MMF, the contrast will be close to 1/sqrt(2) if one starts from a single coherent source. If N lasers are used in parallel to generate the separate beams B1-BN at the fibre input facet, the speckle contrast at the output will be 1/sqrt(2N) and thus it becomes small if N is large. A small contrast will make the detection system more difficult and is therefore less preferred.

The laser beams B1-BN are arranged to strike the input facet of the fibre MMF at different positions and/or angles, and these differences can be set large enough such that the speckle pattern corresponding to each individual beam has a low correlation with the patterns of the other beams. Preferably the output patterns should be orthogonal. The minimally required difference in position or angle in order to achieve this de-correlation depends on the size and refractive index profile of the fibre MMF. The minimum difference in position of incidence of the laser beams at the input facet can be, for example, 4 $\mu$m for a 50 $\mu$m core step-index fibre, and 10 $\mu$m for a 200 $\mu$m core step-index fibre.

Based on the minimally required displacement $\Delta s$ between two beams incident on the input facet and the size of the fibre (a single fibre), the maximum number of parallel beams to be transmitted can be defined by the ratio $\dfrac{d^2}{\Delta s^2}$ where d is the diameter of the fibre core.

The wavelength of the lasers is preferably within the transmission band of the fibre. Fibres for datacomm and telecomm applications typically work around 680nm, 850nm, 980nm, 1300nm or 1550nm. The power of the lasers is that needed for longer propagation distances in order to compensate for losses in the fibre. Power levels below 10 $\mu$W are probably too low to be useful. Above 100mW, eye laser safety becomes an issue. So the most useful range of laser power levels is from about 100 $\mu$W to 100mW.

The laser beam should have a sufficiently large temporal and spatial coherence, otherwise the speckle contrast at the fibre's output facet will be low and it will be difficult to identify/classify different speckle patterns. The required temporal and spatial coherence will depend on the type of fibre considered and its core diameter. For example, it is preferred if the linewidth of each beam is less than 0.2nm. Low spatial coherence laser sources are less useful. This also includes multi-mode lasers, random lasers, chaotic microcavity lasers and large-area VCSELs. LEDs and supercontinuum sources which are less useful.

Preferably, the speckle contrast is high, e.g. close to 1, as this will make it easier for the detection system DE to classify different patterns. The classification system NxC should preferably be able to deal with lower contrasts, e.g. down to contrast values greater than 0.1.

In principle, the type of multi-mode fibre MMF that can be used with embodiments of the present invention supports more than a few modes, e.g. more than 10. There is no specific upper limit in the number of modes that are supported by the fibre. This number of modes supported by a multi-mode fiber depends on the fiber geometry (such as its numerical aperture and diameter), but can easily amount to several thousands of modes e.g. up to 100 000 modes can be supported by the fibre. The number of modes is not the number of parallel channels that can be used. The latter is determined by the minimum shift between beams at the input facet, and will typically be lower than the number of modes supported by the fiber.

Fibres with a core diameter of 50 $\mu$m or 62.5 $\mu$m, have been found to be suitable and these are standard sizes used in datacomm. For the refractive index profile, gradient-index fibres are preferred as this type of fibre minimizes modal dispersion (such that the temporal data rate will be maximal in this fibre type), but other refractive index profiles will also work, e.g. at lower data rates.

Fibre length can be between 0.1m and 10km or longer. The lower limit is due to the fact that some fibre length is needed for the modes to mix and hence generate a speckle pattern. The upper limit is due to modal dispersion which makes the temporal data rate inversely proportional to the fibre length, e.g. the minimum duration $\Delta \tau$ of one temporal bit in a gradient index fibre is

$$\Delta \tau = \frac{5\, L\, NA^4}{64\, n_1^3\, c}$$

where L is the length of the fibre, n1 is the refractive index of the fibre core, c is the speed of light in vacuum and NA is the numerical aperture of the fibre.

For the embodiments of the present invention the coherence properties of the laser source can be selected based on the resulting speckle contrast at the output facet of the multi-mode fibre. The structure of the fibre will influence the size of the speckle spots, and the minimum difference in the position, angle or wavelength of the input beams that leads to uncorrelated speckle patterns.

At the detection side, the intensity of the speckle pattern will be sampled at a number of locations across the output facet of the multi-mode fibre MMF. This can be done using a detector array. A lens or lens system can be used to image the output facet of the multi-mode fibre onto the detector array. One way to implement the detector array is to use a fibre array, of which each fibre is connected to a fast photo-detector. The speed of the photo-detectors is required to be matched to the minimum duration $\Delta\tau$ of one temporal bit. Each of the photo-detectors will generate an electrical signal proportional to the optical intensity that falls onto the detector. These electrical signals are than processed electronically to classify the corresponding speckle pattern. This processing can e.g. be done using an FPGA or a dedicated electronic circuit.

In embodiments of the present invention, at regular time intervals, a calibration set of speckle patterns can be transmitted through the multi-mode fibre. A set of known bit patterns, by turning some lasers on and others off, are sent through the system and these patterns are used either to calculate the cross-correlation with data patterns, or to train the detection system.

An adaptive bit error rate iterative controller can be used to adjust for changes in speckle. The observed speckle patterns will not be fixed in time and changes will occur due to changes in fibre bends, temperature, ... and slight shifts in operational wavelength. These will lead to considerable changes in the spatial mode mixing and thus in the measured patterns.

Embodiments of the present invention can deal with this by regularly recalibrating the communication link. This can be done for example by a supervised learning procedure.

While supervised learning can be important for a space division multiplexing link, the classification algorithm is preferably able to self-learn in real and evolving operation conditions. A suitable cost function is used such that the classification algorithm is able to detect deviations from optimal performance. One such suitable cost function is the bit error rate of transmissions in the system. This cost function needs to be minimize, e.g. by self learning and can be readily measured from the bit error correction bits that are part of every data packet. The detection system is adapted to progressively adjust its parameters to reduce or minimise the cost function.

For example, a Monte Carlo method can be used whereby random changes are made and the quality achieved with these changes is measured (e.g. bit error rate). The system accepts any improvement and moves then to see if an improvement can be achieved by further operation of Monte Carlo methods. If the read-out protocol is based on an artificial neural network, the connection weights in the artificial neural network will constantly be adjusted to keep the cost function minimized. Various online learning algorithms can be used such as gradient descent, recursive least squares or reward-modulated Hebbian learning.

Embodiments of the present invention use another degree of freedom, namely the data capacity can be further increased using the spatial dimension. Embodiments of the present invention implement space-division multiplexing using standard multimode fibres and standard optical telecommunication components.

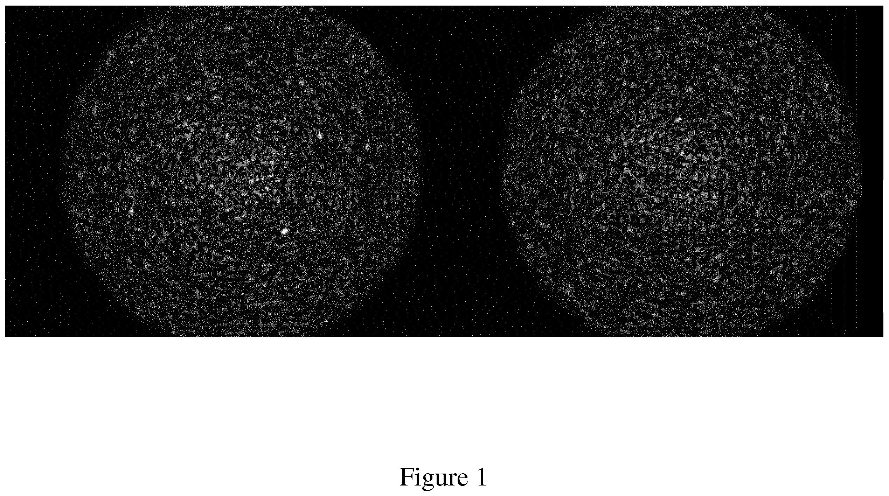

Mixing of the modes during propagation along the fiber leads to a quasi-random interference or a speckle pattern at the far end of the fiber. An example of such a pattern is given in Figure 1. The exact position of the minima and maxima of this speckle pattern depends strongly on different setup parameters, such as the position and wavelength of the input beam. Using a single mode semiconductor laser as source the speckle pattern is dependent upon positions of the light source in the plane transverse to the laser beam's propagation direction.

If different laser sources - at slightly different positions and/or wavelengths - are coupled in the same multi-mode fibre, each laser will produce a different speckle pattern at the output facet. Embodiments of the present invention are to identify from the speckle pattern which laser beam of a plurality of laser beams, e.g. from an array of sources, has been switched on at a particular moment in time. This way, each laser beam carries in parallel a signal through the fibre, and the data capacity is increased proportional to the number of laser bundles that are coupled to the fibre in parallel.

Embodiments of the present invention reconstruct the emitted data by classification of the observed speckle pattern, even though the target classes will shift in time because of minor changes in e.g. temperature or bending of the fibres.

The implementation of SDM according to embodiments of the present invention has the advantage that it can use standard optical fibre components while increasing data transmission capacity in different networks, because several spatial modes carry data over one fibre simultaneously.

The ultimate telecommunication speed of an (optical) system is usually expressed using the spectral efficiency in bits/(Hz s). This number expresses the number of bits that can be transmitted per second and per Hz of signal bandwidth. Current state-of-the-art telecom over long-distance optical fibres reaches about 10 bits/(Hz s). Embodiments of the present invention may reach a maximum spectral efficiency of about 1000 bits/(Hz s). Embodiments of the present invention allow for the observed speckle patterns not being fixed in time. The speckle patterns can change, e.g. in fibre bends, due to temperature changes, due to slight shifts in operational wavelength. These changes can be considerable in the spatial mode mixing and thus in the measured patterns.

Embodiments of the present invention can make use of supervised learning during installment of a space division multiplexing telecomm link. A classification algorithm can be used such that it is able to self-learn in real and evolving operation conditions. Embodiments of the present invention include a test procedure to adapt the read-out during operation, e.g. a test pattern can be sent at intervals to retrain the output.

**Classification**

Embodiments of the present invention can reconstruct the emitted data by classification of the observed speckle patterns. This can be done without requiring expensive specialty fibres.

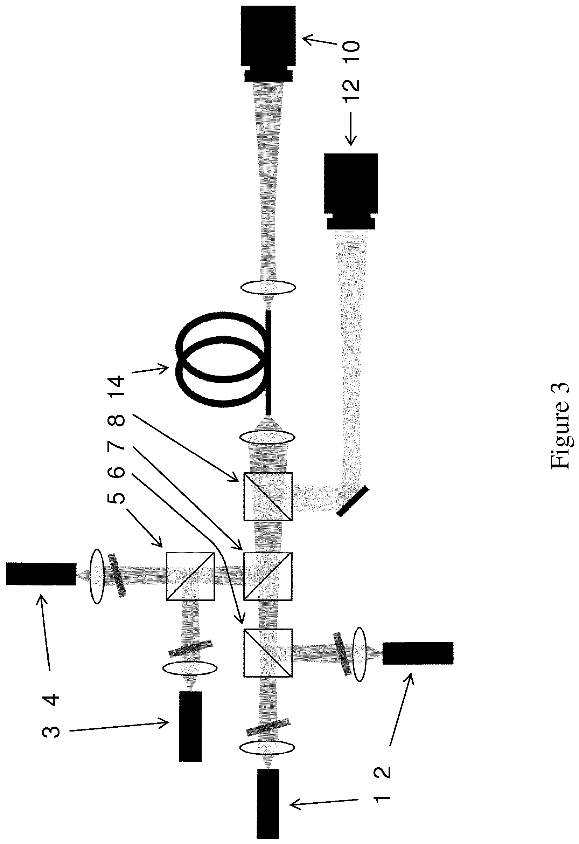

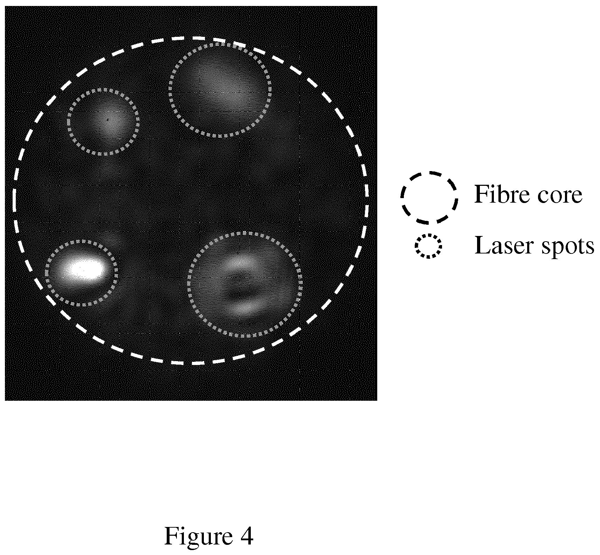

Embodiments of the present invention can use multiple lasers or a single laser split into more light beams that emit light through a fibre. The mode combination and mixing in the fibre, are not controlled but rather a detection system recognizes from an output pattern a pattern of input lasers being switched on or a detection system is taught how to recognize from output patterns a pattern of input lasers being switched on. At the end facet of the fiber a speckle pattern will appear, which is imaged onto an image acquiring device such as a CCD sensor or camera, CMOS camera etc. High speed capturing of images is preferred and a fan-out fibre bundle for example can be used for this purpose, whereby each fibre from the bundle plays the role of a "detection pixel" and can be coupled to a high-speed photodetector. -A correlation between different ones of these speckle images is calculated to detect the states of the lasers by only looking at the output speckle pattern. Hence which lasers are turned on is detected from the speckle pattern when multiple lasers are turned on. A set-up according to an embodiment is shown in Figure 3. Four laser diodes are shown 1-4, e.g. all the same type such as HL6358MG. All of the lasers 1-4 can be coupled into the fibre by using beam-splitters 5, 6, 7. A 50 $\mu$m diameter step-index fibre 14 with a length of 2 m is used for experiments. An image sensor such as a CCD sensor 10, a CMOS camera, a fan-out fibre bundle for example, whereby each fibre from the bundle plays the role of a "detection pixel" and is coupled to a high-speed photodetector is used to image the speckle pattern at the end facet of the fibre 14. A further image sensor such as a CCD sensor 12, a CMOS camera, a fan-out fibre bundle for example, whereby each fibre from the bundle plays the role of a "detection pixel" and is coupled to a high-speed photodetector, can be used to image the reflections of the laser light on the front fibre facet (see Figure 4). Each bright spot in this figure represents one of the four lasers that is coupled into the fibre 14. The purpose of these images of the reflections of the laser light at the front facet is to position these spots far enough from one another such that different lasers lead to un-correlated speckle patterns at the exit. As can be seen, the spot sizes are not the same for all lasers. This is because of the different distances and different lenses that are being used in the set-up. Some of the spots are also brighter than others. This is because not all laser beams are coupled as well into the fibre as others. At the exit of the fibre 14, it is preferred if the different laser beams have the same power. If a laser signal is not coupled well, the input power of the laser can be increased by increasing the operating current, resulting in a brighter spot at the entrance of the fibre.

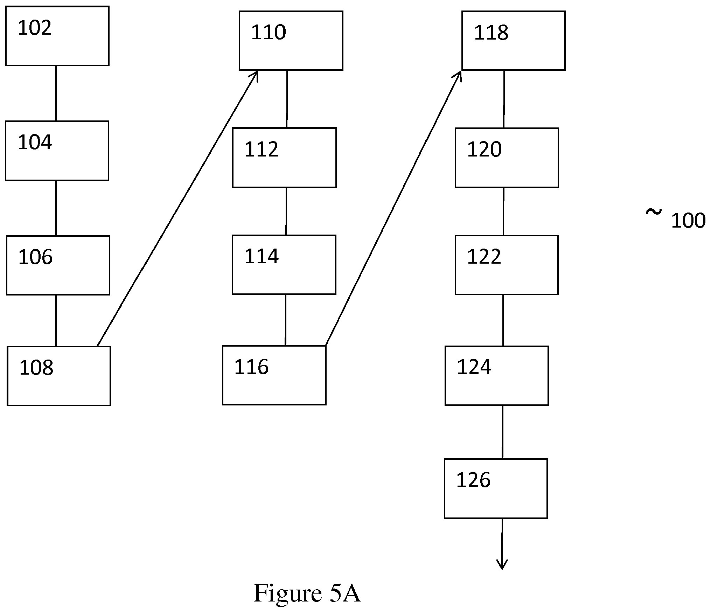

Embodiments are now described for detecting signals created by using only two laser diodes and then with four laser diodes. Referring to Figure 5A in step 102 of a method 100, the lasers 1-4 are to be characterized, since they will probably not have the same characteristics, even if these lasers are from the same type and manufacturer. For example, characteristics of four lasers are shown in Table 1.

Table 1

|  | Ith | Iop | Top | Pop | $\lambda op$ | SM in range |
|---|---|---|---|---|---|---|
| Laser | 26.2 | 40 | 2 | 12.6 | 639.21 | 33 - 41 |
| Laser | 25.3 | 34 | 2 | 7.6 | 639.72 | 28 - 36 |
| Laser | 32.1 | 41 | 2 | 4.1 | 643.63 | 39 - 43 |
| Laser | 25.6 | 37 | 2 | 9.8 | 638.85 | 31 - 39 |

Table 1 shows important characteristics of the four lasers, including the threshold current *Ith*, the operating current *Iop* at which the experiment is executed, the operating temperature *Top*, the power *Pop* and wavelength,\op measured at that operating current and temperature and the range of operating currents at which the laser is operating single- mode. The temperature is chosen as a constant at 22°C. In step 104 the operating currents are chosen such that the power at the exit of the fibre is approximately the same. In step 106 the laser is operated in single-mode. The system should stay within the minimum and maximum of the range in which the laser is operating single-mode, to avoid multi-mode operation. The exact value of these parameters is of less importance, compared to all lasers being operated single mode.

If the wavelength is different for each laser, the correlation between the speckle patterns of different lasers will decrease so it is preferred if the wavelengths are the same or within a range plus or minus 5nm, preferably plus or minus 3nm. The wavelength difference is important when it is desired to characterise the effect of only the spatial position, otherwise the wavelength difference will increase the decorrelation of the speckle patterns.

If lasers 1 and 2 from the set-up shown in Figure 3 are used then in step 108 they can produce four different patterns: both lasers can be on at the same time (represented with 11), one or the other can be turned on (represented with 10 for laser 1 on and 01 for laser 2 on) and both can be turned off (represented with 00).

These can be transmitted in any order or with any number of repeats. In step 110 the power of both beams is preferably measured and by using neutral density filters if necessary, the power is preferably kept approximately the same (with a difference that is preferably smaller than 50% of the average power of the different lasers) for both lasers at the exit of the fibre. The results are shown in Table 2. Note that the power $P1$ is not the same as the operating power $Pop$ from Table 1. The laser beam with power $Pop$ first passes through a ND-filter and a few beam splitters before it arrives at the fibre entrance with a power of $P1$. The power level is of minor importance.

Table 2

|  | $P1(mW)$ | $P2(mW)$ |
|---|---|---|
| Laser | 0.599 ± | 0.129 ± |
| Laser | 0.607 ± | 0.159 ± |

Table 2 shows power output for each laser in front and behind the fibre. $P1$ represents the power measured in front of the fibre and $P2$ is the power that is measured at the exit of the fibre.

With multiple lasers a power of approximately 0.1mW at the end of the fibre for each individual laser diode is achieved preferably. It is preferred if the power should be such that each pixel can be measured with a Signal-to-Noise Ratio of minimally 2.

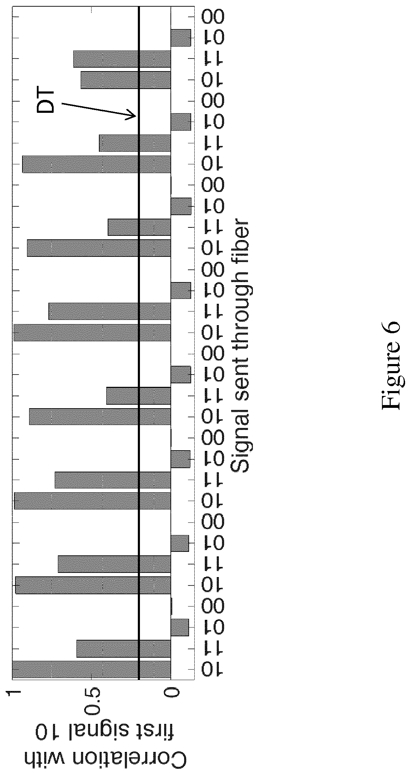

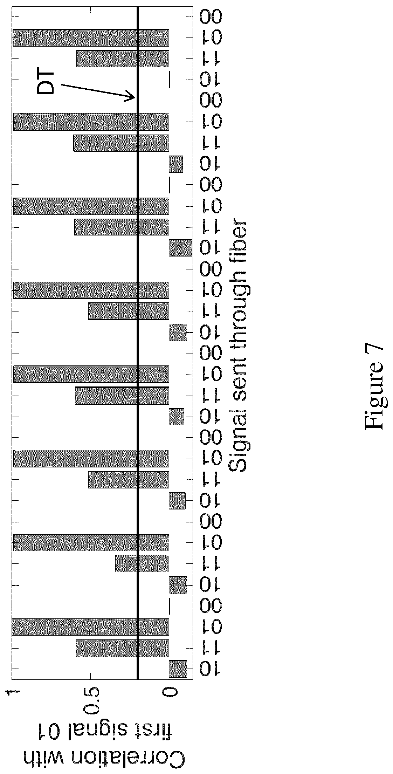

The different signals will cause the speckle pattern at the output of the fibre to change. When signal 00 is used (both lasers off) no speckle pattern will appear. Both of the states 10 and 01 will generate their own speckle pattern (preferably with zero correlation between them) and state 11 will generate a linear combination of the patterns of 10 and 01. Over a time span such as one of approximately 10 minutes, in step 112 different signals are sent through the fibre and imaged onto the image sensor or image sensors such as CCD image sensors 10, CMOS cameras a fan-out fibre bundle for example, whereby each fibre from the bundle plays the role of a "detection pixel" and is coupled to a high-speed photodetector. For example these different signals followed the sequence: 10-11-01-00 which is repeated multiple times in a fixed sequence. Each time when the signal is changed, the corresponding speckle pattern is recorded in step 114 in non-volatile memory such as a memory disk or solid state memory such as a flash memory. In step 116 the images are then filtered such that only the fast varying spatial intensity fluctuations remain. From these images, the correlation is calculated in step 118 with respect to the first signal of 10 (see Figure 6) and again with respect to the first signal of 01 (see Figure 7). From these correlations, the system is able to determine automatically in step 124 which lasers are turned on. For example, in step 120 a decision threshold (DT) can be defined as shown in Figures 6 and 7, such that a correlation value above (below) the decision threshold (DT) signifies that the corresponding laser at the input was turned on (off). The experiment was repeated a few times and from these results which lasers are turned on could always be determined. When comparing the speckle images of the 'unknown' signals to the speckle images of lasers 1 and 2 individually in step 122, the correlation was always above 0.4 if the corresponding laser was turned on, and below 0.1 when the laser was turned off.

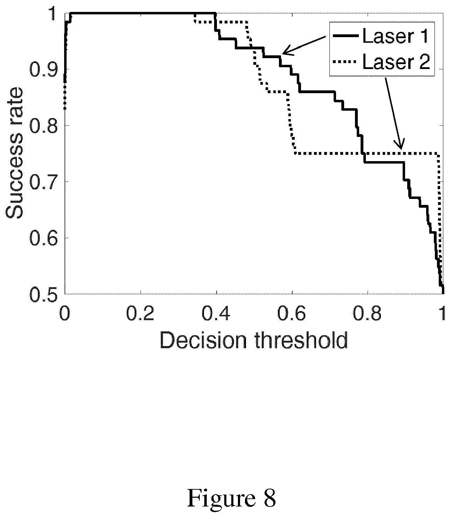

From these correlations, a success rate is calculated in step 126, i.e. the amount of signals that are classified correctly by the computer for a given decision threshold (DT) on the correlation of Figures 6 and 7. By sweeping the threshold of the correlation from 0 to 1, the number of correctly classified signals versus the level of the threshold can be calculated. From this number, the success rate can be determined by dividing it with the total amount of signals that were sent. This provides a success rate in step 126 for both laser 1 and laser 2 and this can be used to set up the telecommunications network. The success rate calculated in function of this threshold value for the different lasers is shown in Figure 8. The success rate is one if, for that given decision threshold, it can always correctly detect the state of the particular laser and decreases for each wrong detection. If the decision threshold is close to zero, some errors will occur because of false positive estimations, i.e. the corresponding laser is detected to be switched on while it actually was switched off. If the decision is too high, errors will occur because of false negatives, i.e. the laser is detected as being switched off while it was actually on. But from the results presented there exists quite a broad range of decision threshold values for which the classification of the speckle patterns based on their correlation works very well. By averaging over both success rates, the range of thresholds can be determined for which the success rate is optimal, meaning that the presence of both lasers can be detected correctly.

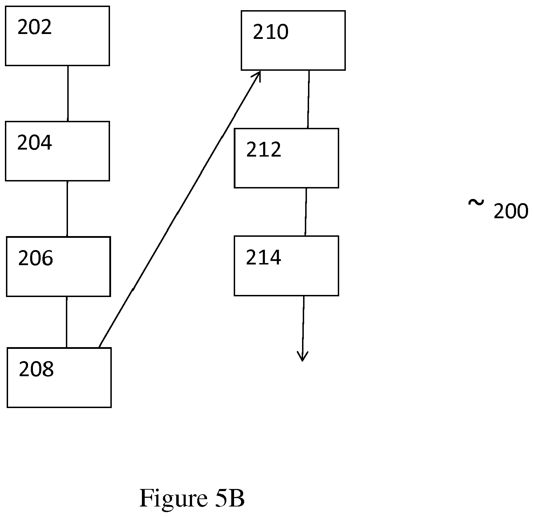

With a method 200 is shown in Figure 5B using third and fourth lasers mounted into the set-up and their output beams are also bundled into the same fibre by using a beam-splitter. Table 1 shows the determination of the different characteristics of the four lasers, e.g. in step 202.

When using four lasers, 16 possible combinations or patterns can be created corresponding to 4 bits of a byte or word. Only 4 bits are transmitted in parallel because there are 4 lasers used at the same time.

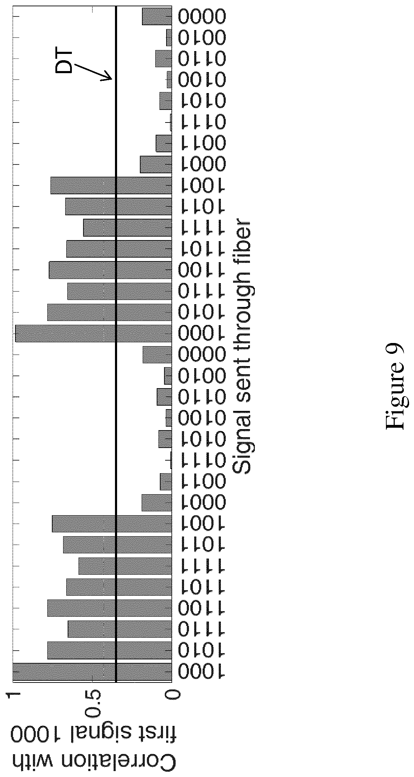

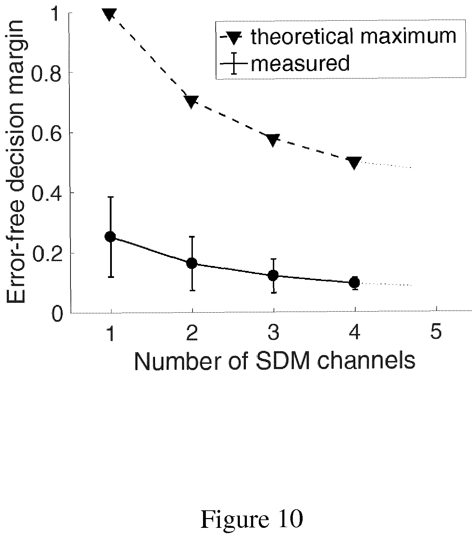

First, each laser diode is turned on for a moment and the speckle image that is created by that particular laser diode is recorded and saved with the image sensor such as CCD 10, a CMOS camera, a fan-out fibre bundle for example, whereby each fibre from the bundle plays the role of a "detection pixel" and is coupled to a high-speed photodetector. The bit codes for these images are: 1000, 0100, 0010 and 0001, each corresponding with one laser. In step 204, all 16 possible patterns that can be created by combining those four lasers can be sent through the fibre in any order with any number of repeats. These signals create a speckle pattern at the end of the fibre 14, which is imaged onto the image sensor such as the CCD 12, a CMOS camera, a fan-out fibre bundle for example, whereby each fibre from the bundle plays the role of a "detection pixel" and is coupled to a high-speed photodetector. This sequence of signals is then repeated four more times, for example for a total of 64 images, executed over a certain time span such as a time span of approximately 15 minutes. These images are then compared with the reference images that were taken in the beginning in step 206 of each laser separately, and the correlation is calculated. Figure 9 shows the correlations between the first signal 1000 and the other 63 images. The same can be done for the other signals: 0100, 0010 and 0001, but these results are not shown because they are very similar to Figure 9. In step 208 a decision threshold is defined as shown in Figure 9 such that a correlation value above (below) the decision threshold signifies that the corresponding laser (Laser 1 in Figure 9) at the input was switched on (off). From these correlations, the success rate is calculated for different lasers in step 210. By averaging over these success rates, a total success rate is calculated in step 212. From this success rate, one can determine in step 214 the range of decision thresholds for which the success rate is optimal. Figure 10 shows the range of optimal decision thresholds for experiments with different numbers of lasers.

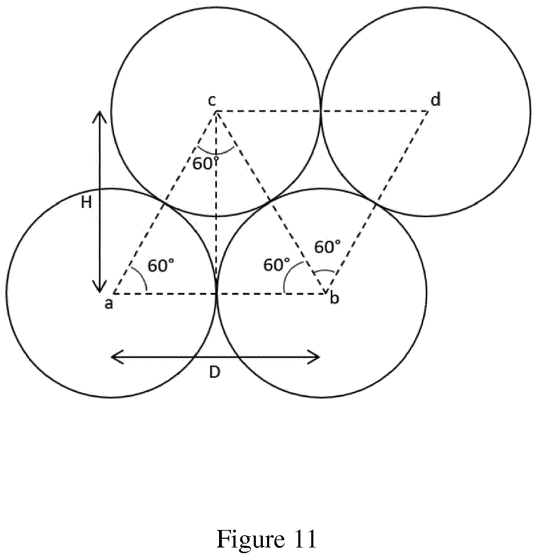

The present invention is not limited to two or four lasers. A larger or maximum number of laser spots can be used with uncorrelated speckle patterns at the output. The maximum number will be related to the densest possible stacking of spots on the fibre core. The highest fill factor can be achieved if the spots are arranged as in Figure 11. In this Figure, *D* is the separation between neighbouring spots and is related to the vertical distance *H* as:

$$H = D \sin 60° \qquad\qquad (EQ\ 1)$$

The surface area of the parallelogram *abcd* is equal to:

$$A_{abcd} = D.H = D^2 \sin 60° \qquad\qquad (EQ.\ 2)$$

The surface are of circle *a* in this is parallelogram equal to:

$$A_a = \pi R^2 \frac{60^o}{360^o} = \pi \frac{R^2}{6}$$

$$(EQ\ 3)$$

with *R* the radius of the circle, which is equal to *D/2*. Only 60° of the circle is confined in the parallelogram *abcd*, therefore the fraction 60/360. The surface of circle *d*, confined by *abcd* is the same as for circle *a*. Circles *b* and *c* have twice as large of an area that is confined in the parallelogram *abcd*. The fill factor *FF* is then:

$$FF = \frac{A_a + A_b + A_c + A_d}{A_{abcd}} = 6\frac{A_a}{A_{abcd}} = \frac{\pi R^2}{4R^2 \sin 60^o} \approx 90.7\%$$

$$(EQ\ 4)$$

The area that can be filled is now calculated. The speckle patterns are uncorrelated if the spot is shifted by $\Delta xspot = 4\mu m$. So every 4 $\mu$m a laser spot is projected onto the laser facet. This value of 4 $\mu$m depends on the fiber type and size, and is the value that has been measured for a $50\mu m$ fiber in particular.

Assuming the entire core can be filled and there is no loss in power at the edges, the number of spots can be calculated from the diameter of the core *dcore* = 50$\mu m$. Dividing the core size, by the size that each spot is occupying, the maximum amount of spots *Nspots* that can be sent through a 50 $\mu$m core fibre is calculated:

$$N_{spots} = \frac{\pi \frac{d_{core}^2}{4}}{\pi \frac{\Delta x_{spot}^2}{4}} FF \approx 152$$

$$(EQ\ .5)$$

This means that 152 spots or signals can be used using this fibre, which means an increase of 152 in number of channels.

A problem with this classification method is that the correlation between entire images has to be calculated. This needs a significant computation time. This might cause increasing problems when sending different patterns through the fibre at a higher bit rate. Further difficulties might occur in recognising the signal at the exit of the fibre immediately despite capturing full-frame images such **as** CCD -images at high-speed or CMOS camera images or a fan-out fibre bundle for example, whereby each fibre from the bundle plays the role of a "detection pixel" and is coupled to a high-speed photodetector.

In a further embodiment of the present invention a linear classifier is used to classify the different patterns. This has the advantage of using only a limited amount of pixels from the speckle images. A linear classifier can be used because the pattern created by a combination of lasers appears as if it were the superposition of the separated patterns of each individual laser, according to the calculations of the correlations from above. A non-linear classifier can also work well and is not excluded by the present invention.

Linear classification has two purposes. When given a series of observations, different groups or classes can be created to which these observations are allocated. Therefore, it is required to allocate each new observation into one of these classes. A distinction between a linear classifier and a non-linear classifier can be made. Whereas a non-linear classifier maps data or observations to another space with a higher dimension before working on it, a linear classifier is directly applied on the data of the input space. A linear classifier fails, however, when the data is not linearly separable and the prediction accuracy of non-linear classifiers is in general higher than that of linear classifiers. But, when it is linearly separable, linear classifiers are simpler and show more efficient training and testing procedures.

Embodiments of the present invention can make use of a linear classifier, since it has been found that the correlations described in the previous section showed that a pattern where multiple lasers are turned on (e.g. 1010), can be recognized from the patterns where the individual lasers are turned on (1000 and 0010 in this example). For example, 16 different classes can be used, one for each combinations of the four lasers. It is required to determine how the pattern for each class will look like. Therefore, the classifier is trained in order to recognize the different patterns. And after the learning procedure, for unknown patterns the linear classifier can be used to recognize them correctly, while using only a limited amount of pixels during the learning and recognizing procedures.

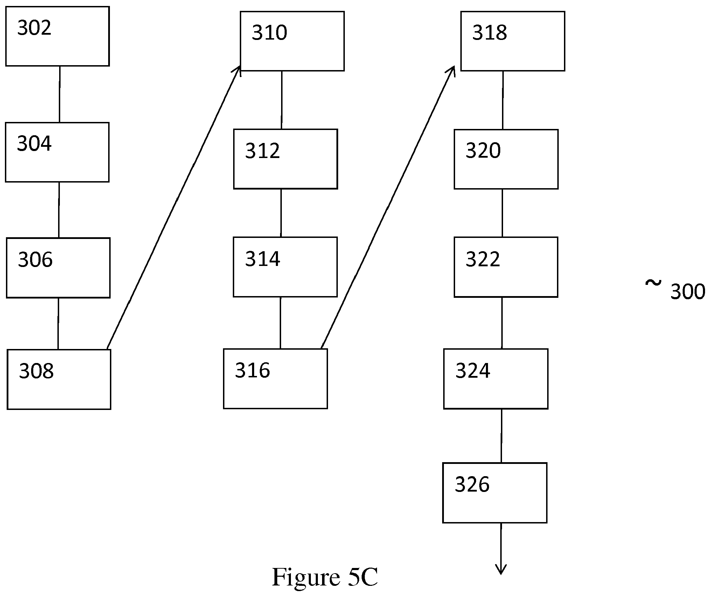

A method 300 will now be described. From the speckle images recorded with the image sensor such as the CCD, a small subset of size $N_{pixels}$ pixels is chosen in step 302 on Figure 5C. The present invention is not limited to CCD imagers but can include any suitable, preferably high speed imagers such as CMOS cameras, a fan-out fibre bundle for example, whereby each fibre from the bundle plays the role of a "detection pixel" and is coupled to a high-speed photodetector. These chosen pixels are preferably evenly distributed over the image in a 2D grid. For a single speckle image, the corresponding pixel intensity values are measured in step 304. These represent an observation $u(m)$, with $m$ representing the image index, ranging from 1 to $M$. The matrix $U$ of size $N_{pixels}$ x $M$ combines all observations, with $M$ representing the number of observations. These observations will serve as inputs to a small feed-forward artificial neural network in step 306. An input mask $W_{in}$ of size $n$ x$Npixels$ is constructed in step 308 to couple these inputs to the first and only layer of $n$ neurons. This mask is constructed with random values uniformly distributed between -1 and +1. Such a random mask diversifies the neural responses as it allows different neurons to respond to different features in the speckle images. A state matrix $X$ of size $M$ x $n$, containing the states of the neurons in response to the presented images, is this found by multiplying the input mask with the input matrix $U$ in step 310.

$$X = W_{in}\ x\ U \qquad\qquad (EQ\ .6)$$

Next, the coupling matrix or readout weights $W_{out}$, of size $n \rightarrow 1$, describes how the neurons couple to an output classifier. In step 312 the output of the i-th classifier is $O_i$ with size 1 x $M$

$$Oi = X \rightarrow W_{out,i} \qquad (EQ\ 7)$$

One classifier will be constructed per laser, so four sets of readout weights $W_{out\,i,\,i}$ are required ranging from 1 to 4. Instep 314 of a learning procedure these readout weights can be optimized to ensure that all laser states (in a training set) are correctly predicted by their corresponding classifier. Since for each speckle image in the training set, the corresponding laser states are known, a target output $Y_i$, of size $M\ x\ 1$, can be constructed for each of the classifiers in step 316. These target signals consist of zeros and ones. A zero represents that for a given pattern, the specific laser signal being tested is turned off (or alternatively on), while a one represents that the laser signal being tested is turned on (or alternatively off). E.g. for Figure 6, only two lasers are used and the first four images of this sequence are given target values 1,1,0 and 0 for the first laser and is repeated for the rest of the sequence.

The training procedure can work as follows. The M observations in the training set are presented to the network in step 318 and the corresponding neuron states are recorded in the state matrix $X$ in step 320. Next, in step 322 the error is minimized between the classifier output $O_i$ and the target output $Y_i$ by optimizing $W_{out,i}$.

$$W_{out,i} = \underset{W}{\mathrm{argmin}} \left( ||X \times W - Y_i||^2 \right)$$

$$(EQ\ 8)$$

The advantage of the linear readout layer lies in the elegant solution to this least-squares regression problem. Step 324 comprises multiplying the pseudo-inverse of $X$ with the target signal Yi from which the optimal readout weights $W_{out,i}$ are found in step 326:

$$W_{out,i} = X+ x\ Y_i \qquad (EQ\ 9)$$

The present invention is not limited to such a method, e.g. algorithms exist, where also the values of the input mask are altered to minimize the output error. However, these approaches can be selected if more complex training procedures are used.

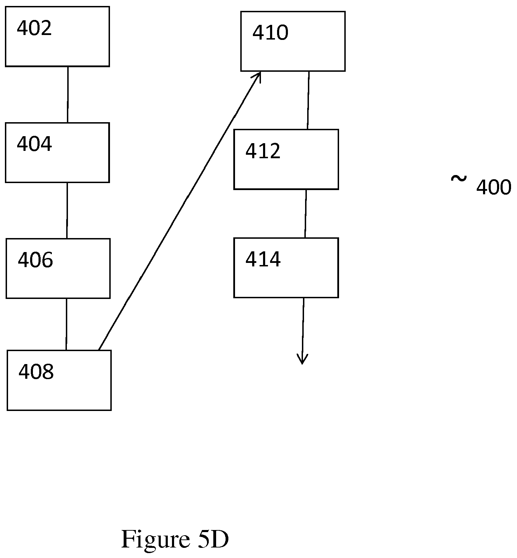

The communication procedure can work as follows. In step 402 of a method 400 shown in Figure 5D, readout weights are available that allow allocation of the different patterns into their correct class and they can now be used to process previously unseen patterns and classify them correctly. The network is presented in step 404 with observations in the communication set and the corresponding neuron states are recorded in step 406 in a new state matrix $X_{comm}$. These are calculated using Eq. 6, using the same input mask $W_{in}$ as before in step 408. The new outputs $O_{comm,i}$ are then calculated using Eq. 7 in step 410.

Unlike the target signals, a classifiers output $O_{comm,i}$ will not be an array of zeros and ones. Rather, assuming a successful training, the output values will be close to zero if the corresponding laser is turned off for a given pattern and close to one if it is turned on. Therefore, a threshold needs to be drawn in step 412, for example here chosen at 0.5. In step 414 for everything above this value, the linear classifier will recognize the laser as turned on for a given pattern and everything below this value is recognized as turned off. Success rates are calculated as above (i.e. this is the ratio between correctly classified signals and the total amount of signal send) in step 416. This is done for all four lasers and the total success rate is calculated from the mean of the individual success rates.

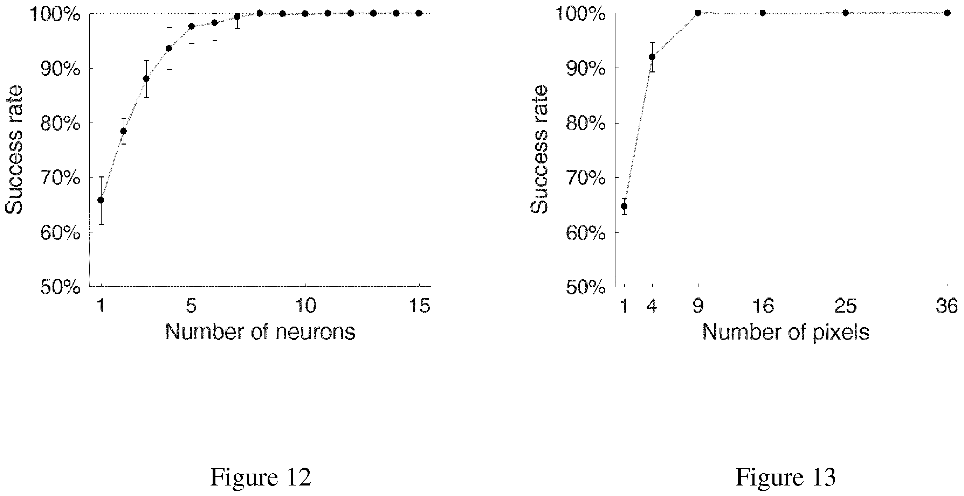

Several parameters in this classification can be tested, including the number of pixels $Npixels$ or kernels chosen from the image, the size of these kernels over which a mean pixel value is calculated and the amount of neurons that are present in the linear classifier. These parameters are tested in function of the success rate in step 418 and shown in Figures 12 and 13. The relation between the success rate and the sizes of the kernels is not shown since the success rate remains approximately the same in most cases.

In Figure 12 the number of neurons that are present in the classifier is swept in function of the success rate when using 16 kernels in the image, each with a kernel size of one pixel. The neurons are useful if there is a non-linearity between the observations and outputs, since they hold the non-linear connection between them. We verified this by replacing Eq. 3.6 by:

$$X = fNL\ (W_{in}\ x\ U\ ) \qquad (EQ\ 11)$$

where *fNL* is a non-linear transfer function, in this embodiment a hyperbolic tangent. However, it did not improve the results.

From the above analysis one can assume that the observations and output have a linear relation, as mentioned above. A signal 1010, for example, is recognized as the superposition of signals 1000 and 0010 using the correlations between the different images. However to be certain neurons are included in the classifier, just in case there is a non-linearity. In Figure 12, one sees that the success rate increases with the number of neurons and reaches the maximum success rate when the number of neurons is approximately the same as the number of SDM channels (i.e. optical sources) by a small margin, i.e. 4 in this experiment shown in figure 12. The number of neurons needs to be at least as much as the number of sources, in order to gather enough information from the recorded images to reconstruct the input signal. Otherwise, not every bit of the input signal can be successfully reconstructed and the success rate will go down.

In Figure 13, the number of pixels is swept and the success rate is calculated for different values of the number of pixels. The size of each pixel can be optimized. When only choosing one pixel in the image, the success rate is low, this is because there is only information of one pixel for each image in order to reconstruct the states of 4 input lasers, and thereby recognize 16 different classes. If the pixel value of two images that belong in different classes is approximately the same, the linear classifier will not be able to recognize them always correctly and the success rate will go down. The success rate goes up as more pixels are chosen in the image, because there is more information available for the classifier in order to recognize the patterns more correctly. The success rate reaches one when using 9 pixels in the image. This means that there is only a need to use 9 pixels from the speckle images in order to classify unknown signals perfectly and this would decrease the computation time significantly compared to any method using the entire image (about 1000x 1000 pixels) in order to recognize them. The number of pixels should exceed by a small margin the number of SDM channels (i.e. optical sources). This margin is 5 pixels in the experiment shown in figure 13: due to the random nature of the neural network (here the random placement of the readout pixels) this small margin is needed to make the classifier error-free and robust.

Whereas SDM using specialty fibres is based on the development of multiple cores and/or a waveguide structure within fibres that support a few transverse modes, whereby each core/mode carries an optical data signal, embodiments of the present invention make use of many transverse modes which are accessed and which recombine randomly and uncontrollably into a speckle pattern which is used for classification of the output. Embodiments of the present invention can be used with standard multimode fibre and can be inserted in the existing telecom architecture.

In mode division multiplexing, several modes are launched into a conventional multimode graded-index optical fibre using spatial filtering techniques. Due to the interaction that exists within this fibre (and which also leads to the speckle pattern), a lot of cross talk exists between these modes and fibre lengths are therefore limited.

In embodiments of the present invention the bit pattern at the end of the fibre is detected at the receiver side.

The present invention can be implemented in local area networks (LANs) and data centers, e.g. connection lengths ranging up to 1000m. In these systems, multi-mode fibres are used presently and often new data links are configured and expanded. The present invention can be implemented in long distance telecomm links.

Embodiments of the present invention do not need to make use of photo-refractivity which is typically a slow nonlinear process, and hence the calibration process in embodiments of the present invention are quick. Embodiments of the present invention do not impose high power requirements of the laser systems used.

Electronic devices e.g. classifiers such as described with respect to embodiments of the present invention can be standalone digital processing devices or can be embedded in another device. Such devices or methods can use a digital processing engine to carry out functions. The processing engine preferably has processing capability such as provided by one or more microprocessors, FPGA's, or a central processing unit (CPU) and/or a Graphics Processing Unit (GPU), and is adapted to carry out the respective functions by being programmed with software, i.e. one or more computer programs. References to software can encompass any type of programs in any language executable directly or indirectly by a processor, either via a compiled or interpretative language such as Java. The implementation of any of the methods of the present invention can be performed by or assisted by logic circuits, electronic hardware, processors or circuitry which can encompass any kind of logic or analog circuitry, integrated to any degree, and not limited to general purpose processors, digital signal processors, ASICs, FPGAs, discrete components or transistor logic gates and similar.

Such devices may have memory (such as non-volatile memory, non-transitory computer readable medium, RAM and/or ROM), an operating system, optionally a display such as a fixed format display, ports for data entry devices such as a keyboard, a pointer device such as a "mouse", serial or parallel ports to communicate other devices, network cards and connections to connect to any of the networks. The software can be embodied in a computer program product adapted to carry out the functions itemised below when the software is loaded onto the controller and executed on one or more processing engines such as microprocessors, ASIC's, FPGA's etc. devices for use with any of the embodiments of the present invention can incorporate a computer system capable of running one or more computer applications in the form of computer software.

When the software is loaded onto the respective device or devices and executed on one or more processing engines such as microprocessors, ASIC's, FPGA's methods of embodiments of the present invention can be performed by one or more computer programs running on an electronic device by being loaded into a memory and run on or in association with an operating system such as Windows™ supplied by Microsoft Corp, USA, Linux, Android or similar. The electronic device can include a main memory, preferably random access memory (RAM), and may also include a non-transitory hard disk drive and/or a removable non-transitory memory, and/or a non-transitory solid state memory. Non-transitory removable memory can be an optical disk such as a compact disc (CD-ROM or DVD-ROM), a magnetic tape, which is read by and written to by a suitable reader. The removable non-transitory memory can be a computer readable medium having stored therein computer software and/or data. The non-volatile storage memory can be used to store persistent information that should not be lost if the computer system is powered down. The application programs may use and store information in the non-volatile memory.

Computer program products and digital processing hardware can be adapted to transmit information from a transmitting location to a receiving location, with a multimode connection having an input located at said transmitting location and having an output located at said receiving location. When the hardware is run or when software is loaded onto the respective device or devices and executed on one or more processing engines such as microprocessors, ASIC's, FPGA's the following functions are carried out:

generating a plurality of coherent light beams at said transmitting location and providing the plurality of coherent light beams to said transmitting location by way of space domain modulation of said coherent light beams at the input of said multimode connection, and/or

generating a plurality of speckle patterns at the output thereof, receiving said plurality of speckle patterns at the receiving location and transmitting the output of the multimode connection to an array of photodetectors, and processing outputs of the array of photodetectors to classify one of the plurality of speckle patterns as from one of the coherent light beams. The one of the plurality of speckle patterns can be co-generated from one of the coherent light beams.

When the hardware is run or when software is loaded onto the respective device or devices and executed on one or more processing engines such as microprocessors, ASIC's, FPGA's the following functions are carried out:

applying time domain modulation to said coherent light beams,

processing can be operable to recover said time domain modulation from said plurality of speckle patterns.

When the hardware is run or when software is loaded onto the respective device or devices and executed on one or more processing engines such as microprocessors, ASIC's, FPGA's the following functions are carried out:

setting any, some or all of:

wavelength of a coherent light beam,
Incident position on the input to the multimode connection, and
Polarization of a coherent light beam, and/or

the plurality of coherent lights beams are a plurality of laser beams from different lasers or a single laser beam split into several laser beams.

When the hardware is run or when software is loaded onto the respective device or devices and executed on one or more processing engines such as microprocessors, ASIC's, FPGA's the following functions are carried out:

modulating the intensity or phase of one some or all of the plurality of coherent light beams,

modulating comprises modulating an injection current of the different lasers or modulating the intensity with an electro-optical modulator to each of the several laser beams split from a single laser beam.

When the hardware is run or when software is loaded onto the respective device or devices and executed on one or more processing engines such as microprocessors, ASIC's, FPGA's the following functions are carried out:

the multimode connection can comprise a multimode optical fibre that transmits the plurality of coherent beams from the input to the output, or

the multimode fibre can support many transverse modes.

When the hardware is run or when software is loaded onto the respective device or devices and executed on one or more processing engines such as microprocessors, ASIC's, FPGA's the following functions are carried out:

the plurality of coherent light beams differ from one another in at least one of the following aspects: there is a minimum difference in the wavelength of each beam and/or in the position of each beam at a front facet of the multimode connection and/or in the angle of incidence of each beam at the front facet of the multimodal connection and/or in the polarization of each beam, or

the plurality of coherent light beams differ from one another enough such that the speckle pattern generated by each of the coherent beams separately is uncorrelated with the speckle pattern generated by any of the other beams, or

cross-correlating between any two of the speckle patterns being smaller than 0.2 or about 0.2, or

processing of outputs of the array of photodetectors is adapted to deduce from the speckle patterns which beams have been switched on at a particular moment in time.

Summarising: a computer program product can be provided which when executed on a processing engine can perform any of the methods according to the present invention. A non-transitory storage means can be used to store the computer program product. The computer program product can be compiled for a processing engine in any of the electronic devices or is written in an interpretive language such as Java that runs on a virtual machine such as the Java virtual machine. The non-transitory signal storage medium can be for example, an optical disk (CD-ROM or DVD-ROM), a digital magnetic tape, a magnetic disk, a solid state memory such as a USB flash memory, a ROM, etc.

**Claims**

1. A communication system for transmitting information from a transmitting location to a receiving location, comprising; a multimode connection having an input located at said transmitting location and having an output located at said receiving location, coherent light generating means at said transmitting location operable to provide a plurality of coherent light beams to said transmitting location by way of space domain modulation of said coherent light beams, means providing space domain modulation of said coherent light beams to the input of said multimode connection, said multimode connection operating to provide a plurality of speckle patterns at the output thereof, means operable to receive said plurality of speckle patterns at the receiving location and to transmit the output of the multimode connection to an array of photodetectors, and means to process outputs of the array of photodetectors to classify one of the plurality of speckle patterns as from one of the coherent light beams.

2. The communication system according to claim 1, further comprising means for applying time domain modulation to said coherent light beams and said means to process is operable to recover said time domain modulation from said plurality of speckle patterns.

3. The communication system according to any preceding claims, further comprising means to set any, some or all of:

   wavelength of a coherent light beam,
   Incident position on the input to the multimode connection, and
   Polarization of a coherent light beam.

4. The communication system according to any preceding claim, wherein the plurality of coherent lights beams are a plurality of laser beams from different lasers or a single laser beam split into several laser beams or a combination of these two schemes.

5. The communication system according to any preceding claim, further comprising means to modulate the intensity or phase of one some or all of the plurality of coherent light beams, or wherein the means to modulate comprise means to modulate an injection current of the different lasers or modulating the intensity with an electro-optical modulator to each of the several laser beams split from a single laser beam.

6. The communication system according to any preceding claim, wherein the multimode connection comprises a multimode optical fibre that transmits the plurality of coherent beams from the input to the output or wherein the multimode optical fibre supports many transverse modes.

7. The communication system according to any preceding claim, wherein the plurality of coherent light beams differ from one another in at least one of the following aspects: there is a minimum difference in the wavelength of each beam and/or in the position of each beam at a front facet of the multimode connection and/or in the angle of incidence of each beam at the front facet of the multimodal connection and/or in the polarization of each beam, or wherein the plurality of coherent light beams differ from one another enough such that the speckle pattern generated by each of the coherent beams separately is uncorrelated with the speckle pattern generated by any of the other beams.

8. The communication system according to any preceding claim, further comprising a multi-mode fibre coupler.

9. The communication system according to claim 18 wherein multi-mode fibre coupler has a plurality of input fibres and an output, to which a part of the light of each exiting input fibre is coupled.

10. The communication system according to any of the claims 7 to 9, wherein a cross-correlation between any two of the speckle patterns is smaller than 0.2 or about 0.2.

11. The communication system according to any preceding claim, wherein the means to process outputs of the array of photodetectors is adapted to deduce from the speckle patterns which beams have been switched on at a particular moment in time.

12. A method for transmitting information from a transmitting location to a receiving location, with a multimode connection having an input located at said transmitting location and having an output located at said receiving location, the method comprising:

generating a plurality of coherent light beams at said transmitting location and providing the plurality of coherent light beams to said transmitting location by way of space domain modulation of said coherent light beams at the input of said multimode connection, generating a plurality of speckle patterns at the output thereof, receiving said plurality of speckle patterns at the receiving location and transmitting the output of the multimode connection to an array of photodetectors, and processing outputs of the array of photodetectors to classify one of the plurality of speckle patterns as from one of the coherent light beams.

13. A classifier for use with a system for transmitting information from a transmitting location to a receiving location, over a multimode connection having an input located at said transmitting location and having an output located at said receiving location, coherent light generating means at said transmitting location operable to provide a plurality of coherent light beams to said transmitting location by way of space domain modulation of said coherent light beams, means providing space domain modulation of said coherent light beams to the input of said multimode connection, said multimode connection operating to provide a plurality of speckle patterns at the output thereof, the classifier comprising: means operable to receive said plurality of speckle patterns at the receiving location and to transmit the output of the multimode connection to an array of photodetectors, and means to process outputs of the array of photodetectors to classify one of the plurality of speckle patterns as from one of the coherent light beams.

14. A computer program product that executes method according to claim 12, or for implementing the communication system of any of the claims 1 to 11 when loaded onto a processing engine.

15. A non-transitory signal storage medium storing the computer program product of claim 14.

Figure 1

Figure 2

Figure 3

Figure 4

| 102 |

| 104 |

| 106 |

| 108 |

| 110 |

| 112 |

| 114 |

| 116 |

| 118 |

| 120 |

| 122 |

| 124 |

| 126 |

~ 100

Figure 5A

Figure 5B

Figure 5C

300

Figure 5D

Figure 6

Figure 7

Figure 8

EP 3 599 730 A1

Figure 9

Figure 10

Figure 11

Figure 13

Figure 12

EP 3 599 730 A1

**EUROPEAN SEARCH REPORT**

Application Number

EP 18 18 5497

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 395 060 A2 (NIPPON TELEGRAPH & TELEPHONE [JP]) 31 October 1990 (1990-10-31) | 1-8, 10-15 | INV. H04J14/04 |
| Y | * column 6, line 46 - column 7, line 5 * * column 7, line 24 - column 8, line 5 * * column 8, lines 22-27, 46-53 * * column 9, lines 39-42 * * column 10, line 43 - column 12, line 35 * * figure 4 * * abstract * | 9 | |
| X | FLAMM D ET AL: "All-Digital Holographic Tool for Mode Excitation and Analysis in Optical Fibers", JOURNAL OF LIGHTWAVE TECHNOLOGY,, vol. 31, no. 7, 1 April 2013 (2013-04-01), pages 1023-1032, XP011496818, ISSN: 0733-8724, DOI: 10.1109/JLT.2013.2240258 | 1-8, 10-15 | |
| Y | * INTRODUCTION * * section VI * * figures 17 (a)-(f) * | 9 | TECHNICAL FIELDS SEARCHED (IPC) |
| Y | US 2010/329671 A1 (ESSIAMBRE RENE-JEAN [US] ET AL) 30 December 2010 (2010-12-30) | 9 | H04J |
| A | * figures 1, 3B, 5, 12 * * paragraphs [0026] - [0029], [0054], [0056], [0058], [0059], [0066], [0071], [0072], [0083], [0087], [0098] - [0103] * | 1-8, 10-15 | |

The present search report has been drawn up for all claims

| Place of search | Date of completion of the search | Examiner |
|---|---|---|
| Munich | 17 January 2019 | Petitit, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 18 5497

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2019

| Patent document cited in search report | | Publication date | Patent family member(s) | | Publication date |
|---|---|---|---|---|---|
| EP 0395060 | A2 | 31-10-1990 | CA | 2015211 A1 | 28-10-1990 |
| | | | DE | 69022098 D1 | 12-10-1995 |
| | | | DE | 69022098 T2 | 21-03-1996 |
| | | | EP | 0395060 A2 | 31-10-1990 |
| US 2010329671 | A1 | 30-12-2010 | CN | 102484536 A | 30-05-2012 |
| | | | EP | 2446561 A1 | 02-05-2012 |
| | | | JP | 5420765 B2 | 19-02-2014 |
| | | | JP | 2012531812 A | 10-12-2012 |
| | | | KR | 20120040207 A | 26-04-2012 |
| | | | US | 2010329671 A1 | 30-12-2010 |
| | | | WO | 2010151432 A1 | 29-12-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5136666 A, Anderson

### Non-patent literature cited in the description

- **D.J. RICHARDSON ; J.M. FINI ; L.E. NELSON.** Space Division Multiplexing in Optical Fibres. *Nature Photonics,* 2013, vol. 7, 354-362
- **A. SCHÜLZGEN ; H. DE WAARDT ; A.M.J. KOONEN ; C.M. OKONKWO.** Ultra-high-density spatial division multiplexing with a few-mode multicore fibre. *Nature Photonics,* 2014, vol. 8, 865-870
- **H. CHEN ; C. JIN ; B. HUANG ; N. K. FONTAINE ; R. RYF ; K. SHANG ; N. GRÉGOIRE ; S. MORENCY ; R.-J. ESSIAMBRE ; G. LI.** Integrated cladding-pumped multicore few-mode erbium-doped fibre amplifier for space-division-multiplexed communications. *Nature Photonics,* 2016, vol. 10, 529-533
- **D. J. RICHARDSON.** New optical fibres for high-capacity optical communications. *Philosophical Transactions of the Royal Society,* 2016, vol. A, 374
- **A. SANO et al.** 409-Tb/s + 409-Tb/s crosstalk suppressed bidirectional MCF transmission over 450 km using propagation-direction interleaving. *Optics Express,* 2013, vol. 21, 16777-16783
- **K. IGARASHI ; D. SOMA ; Y. WAKAYAMA ; K. TAKESHIMA ; Y. KAWAGUCHI ; N. YOSHIKANE ; T. TSURITANI ; I. MORITA ; M. SUZUKI.** Ultra-dense spatial-division-multiplexed optical fibre transmission over 6-mode 19-core fibres. *Optics Express,* 2016, vol. 24, 10213-10231
- **K. SHIBAHARA et al.** Dense SDM (12 core $\times$ 3 mode) transmission over 527 km with 33.2-ns mode-dispersion employing low complexity parallel MIMO frequency-domain equalization. *Proceedings of the Optical Fibre Communications Conference OFC 2015, Paper Th5C.3,* 2015
- **N. BAI et al.** Mode-division multiplexed transmission with inline few-mode fibre amplifier. *Optics Express,* 2012, vol. 20, 2668-2680
- **S. BERDAGUE ; P. FACQ.** Mode division multiplexing in optical fibres. *Applied Optics,* 1982, vol. 21, 1950-1955
- **R. RYF ; N. K. FONTAINE ; H. CHEN ; B. GUAN ; B. HUANG ; M. ESMAEELPOUR ; A. H. GNAUCK ; S. RANDEL ; S.J.B. YOO ; A.M.J. KOONEN.** Mode-multiplexed transmission over conventional graded-index multimode fibres. *Optics Express,* 2015, vol. 23, 235-246